# EUROPÄISCHE PATENTSCHRIFT

(11) **EP 2 813 319 B1**
(45) Veröffentlichungstag und Bekanntmachung des Hinweises auf die Patenterteilung: **12.08.2015**
(21) Anmeldenummer: 13003014.1
(22) Anmeldetag: 12.06.2013
(51) Int. Cl.: B23Q 3/155

(54) **Kreisringförmiges Werkzeugmagazinregal in Turmbauweise und Verfahren zur Werkzeugumladung**
Circular ring tool cartridge shelf in tower construction and method for switching tools
Etagère de magasin d'outil de forme annulaire dotée d'une structure de tour et procédé de changement d'outil

(43) Veröffentlichungstag der Anmeldung: 17.12.2014
(73) Patentinhaber: Maschinenfabrik Berthold Hermle AG, 78559 Gosheim (DE)
(72) Erfinder: Bernhard, Franz-Xaver, 78549 Spaichingen (DE); Schwörer, Tobias, 78598 Königsheim (DE); Uttenweiler, Dieter, 72359 Dotternhausen (DE)
(74) Vertreter: Hoefer & Partner Patentanwälte mbB

(56) Entgegenhaltungen:
- EP-A1- 0 319 914
- EP-A1- 2 537 629
- DE-U1-202011 001 493

## Beschreibung

Die Erfindung betrifft ein kreisringförmiges Werkzeugmagazinregal in Turmbauweise, mit einem Grundgestell für die Aufnahme eines Werkzeugregals, das eine Vielzahl von vertikal übereinander und kreisringförmig angeordneten, nicht beweglichen Werkzeugablageplätzen für Bearbeitungswerkzeuge aufweist, und eines kraftbetriebenen Werkzeughandlings für den Werkzeugtransport von dem Werkzeugmagazinregal zu einem maschinenseitigen Pick-Up-Werkzeugmagazinspeicher und umgekehrt, wobei im Kreismittelpunkt der Werkzeugablageplätze ein Spindelturm angeordnet ist, der um eine vertikale Drehachse drehbar gelagert ist.

Derartige kreisringförmiges Werkzeugmagazinregale in Turmbauweise sind aus dem Stand der Technik z. B. aus der DE 20 2011 001 493 U1 oder der EP 1 604 775 B1 bekannt.

Die Erfindung betrifft ferner ein Verfahren zur automatischen Werkzeugumladung bei einem Werkzeugmagazinregal.

Ein Verfahren zur automatischen Werkzeugumladung eines bewegbaren und maschinenseitig integrierten Pick-Up-Werkzeugmagazinspeichers nach dem Stand der Technik ist in der DE 43 04 361 A1 beschrieben und abgebildet.

Bei Bearbeitungszentren mit integrierten Werkzeugmagazinspeichern wird die Werkzeugspeicherkapazität von Bearbeitungswerkzeugen in der Regel durch die Abmessungen und Platzverhältnisse des Bearbeitungszentrums bestimmt. Daher werden in Abhängigkeit der Kundenapplikationen oft Zusatzmagazine eingesetzt, um die Werkzeugspeicherkapazität zu vergrößern. Solche Zusatzmagazine übergeben die dort gelagerten Bearbeitungswerkzeuge an den maschinenintegrierten Werkzeugmagazinspeicher. Um auf kleiner Aufstellfläche die Werkzeugspeicherkapazität größtmöglich zu erweitern, eignen sich Zusatzmagazine in Turmbauweise, die mehrere vertikal übereinander angeordnete Ablageebenen beinhalten, besonders gut. Durch eine kreisringförmige Anordnung der Werkzeugablageplätze können alle Ablageplätze mit nur zwei translatorischen und einer rotatorischen Bewegung durch einen Werkzeuggreifer beladen und entladen werden.

Derartige Zusatzmagazine für Bearbeitungswerkzeuge sind aus dem Stand der Technik bekannt. So beschreibt beispielsweise die DE 20 2011 001 493 U1 ein solches Zusatzmagazin, das den maschinenintegrierten Werkzeugmagazinspeicher um eine Vielzahl von Werkzeugablageplätzen erweitert. Der Austausch der Bearbeitungswerkzeuge zwischen dem maschinenseitigen Magazin und dem Zusatzmagazin erfolgt dabei an definierten Übergabepositionen. Die kreisringförmig angeordneten Ablageplätze im Zusatzmagazin werden über ein Handlingsystem angefahren. Um die dafür erforderliche Drehbewegung auszuführen ist ein motorischer Drehantrieb am Kopf der Hubsäule vorhanden. Nachteilig an der konstruktiven Ausgestaltung ist die beidseitige (oben und unten) und somit kostenintensive Lagerung der Hubsäule.

In der EP 1 604 775 B1 wird ebenfalls ein kreisringförmiges Werkzeugmagazinregal in Turmbauweise beschrieben und dargestellt. Dieses dient dazu, vertikal ausgerichtete Bearbeitungswerkzeuge mittels Wechselarm direkt in die Werkzeugspindel des Bearbeitungszentrums einzuwechseln und ist daher nicht dafür vorgesehen, in Verbindung mit einem Pick-Up-Werkzeugmagazinspeicher betrieben zu werden. Das Werkzeughandling ist an einer drehbar gelagerten Führung angebracht und kann sich in vertikaler Richtung auf und ab bewegen. Die drehbare Lagerung dieser Führung befindet sich an beiden Enden der Führung (oben und unten). Dementsprechend muss die Fertigung der gesamten Trägerkonstruktion dieses Werkzeugmagazinregals hohen Genauigkeitsansprüchen genügen, wodurch hohe Kosten entstehen.

Ausgehend vom Stand der Technik liegt der vorliegenden Erfindung die Aufgabe zugrunde, ein Werkzeugmagazinregal als Zusatzmagazin zu einem maschinenintegrierten vertikal ausgerichteten Pick-Up-Werkzeugmagazinspeicher zu schaffen, mit dem die Probleme und Nachteile, die sich aus dem Stand der Technik ergeben, gelöst werden können.

Diese erfindungsgemäße Aufgabe wird bei einem kreisringförmigen Werkzeugmagazinregal in Turmbauweise, mit einem Grundgestell für die Aufnahme eines Werkzeugregals, das eine Vielzahl von vertikal übereinander und kreisringförmig angeordneten, nicht beweglichen Werkzeugablageplätzen für Bearbeitungswerkzeuge aufweist, und eines kraftbetriebenen Werkzeughandlings für den Werkzeugtransport von dem Werkzeugmagazinregal zu einem maschinenseitigen Pick-Up-Werkzeugmagazinspeicher und umgekehrt, wobei im Kreismittelpunkt der Werkzeugablageplätze ein Spindelturm angeordnet ist, der um eine vertikale Drehachse drehbar gelagert ist, erfindungsgemäß dadurch gelöst, dass das Grundgestell aus einem monolithisch aufgebauten, plattenförmigen Grundbett besteht, in dem die Drehachse über eine Lageranordnung frei auskragend gelagert ist.

Unter dem Begriff - Turmbauweise - wird im Sinne der vorliegenden Erfindung ein Werkzeugmagazinregal verstanden, das aus mehr als einer Werkzeugablageebene besteht, die vertikal übereinander angeordneten sind, um die Ablagekapazität einer einzelnen Ebene zu vervielfachen. Die Geometrie der äußeren Umhausung kann dabei typischerweise der Bauform eines Turmes ähneln.

Unter dem Begriff - vertikales Bearbeitungszentrum - wird im Sinne der vorliegenden Erfindung ein Bearbeitungszentrum verstanden, bei dem die Werkstückbearbeitung durch die vertikal ausgerichtete Werkzeugspindel ausgeführt wird.

Unter dem Begriff - Pick-Up-Werkzeugmagazinspeicher - wird im Sinne der vorliegenden Erfindung ein Werkzeugmagazinspeicher innerhalb des Bearbeitungszentrums verstanden, der für einen Werkzeugwechsel im Pick-Up Verfahren geeignet ist. Beim sogenannten Werkzeugwechsel im Pick-Up-Verfahren, werden die Bearbeitungswerkzeuge von der vertikal ausgerichteten Werkzeugspindel ohne Zuhilfenahme einer externen Werkzeugwechselvorrichtung direkt aus dem Pick-Up-Werkzeugmagazinspeicher entnommen und nach dem Gebrauch wieder in diesem abgelegt.

Unter dem Begriff - monolithisch aufgebautes Grundbett - wird im Sinne der vorliegenden Erfindung ein aus einem Stück bestehendes Grundbett für das kreisringförmige Werkzeugmagazinregal verstanden.

Unter dem Begriff - Kragarmlagerung - wird im Sinne der vorliegenden Erfindung die einseitige Lagerung eines vertikal auskragenden Spindelturms verstanden, die den Sockel des Spindelturms mit dem Grundbett verbindet und eine motorisch angetriebene Drehbewegung des Spindelturms ermöglicht. Die Kragarmlagerung ist das einzige Verbindungselement zwischen den feststehenden Baugruppen des Werkzeugmagazinregals und des drehbaren Spindelturms.

Die Erfindung verbessert den bekannten Stand der Technik dahingehend, dass keine beidseitige Lagerung des Spindelturms mehr erforderlich ist und somit keine Trägerkonstruktion benötigt wird, in welcher der Spindelturm zusätzlich auf der Oberseite gegengelagert wird. Dies lässt eine wesentlich kostengünstigere Fertigung zu, da die hohen Genauigkeitsanforderungen, die für eine beidseitige Lagerung erforderlich wären, nicht zum Tragen kommen. Des Weiteren besteht der Vorteil, dass auf der Oberseite keine für Wartungstätigkeiten schwer zugängliche Gegenlagerung vorhanden ist. Durch die monolithische Ausgestaltung des Grundgestells lassen sich die Genauigkeitsanforderungen für die Kragarmlagerung leicht erreichen und es wird außerdem ein besonders montagefreundlicher Aufbau des System erreicht, indem das System eine Eigenstandsicherheit erreicht und zudem kein Montageaufwand für den Zusammenbau mehrerer Einzelteile des Grundgestells entsteht.

Vorteilhafte Weiterbildungen ergeben sich aus den Unteransprüchen.

Gemäß einer bevorzugten Weiterbildung ist die Lageranordnung als Turmlager ausgebildet.

Gemäß einer bevorzugten Weiterbildung ist das Turmlager als einreihiges oder zweireihiges Vierpunktlager ausgebildet.

Gemäß einer bevorzugten Weiterbildung weist das Vierpunktlager einen mit einer Außenverzahnung versehenen Außenring, der mit dem Grundbett verschraubt ist, und einen Innenring, der mit dem Spindelturm verschraubt ist, auf.

Gemäß einer bevorzugten Weiterbildung ist für den Drehantrieb des Spindelturms ein Antriebsmotor mit einem Antriebsritzel vorgesehen, der fest an dem Spindelturm angebracht ist und der mit der Außenverzahnung des Außenrings in Wirkverbindung steht, so dass sich das Antriebsritzel mit dem Antriebsmotor beim Drehen des Spindelturms an der feststehenden Außenverzahnung des Turmlagers abwälzt.

Gemäß einer bevorzugten Weiterbildung ist das Grundbett unter Ausbildung aller Funktionsflächen und Funktionsräume einteilig aus Polymerbeton, Reaktionsharzbeton o. dgl. geformt. Somit brauchen die Funktionsflächen und Funktionsräume nicht mehr spanend nachbearbeitet zu werden.

Gemäß einer bevorzugten Weiterbildung ist das Grundbett auf Maschinenfüßen gelagert, die in der Höhe anpassbar und in rutsch- und vibrationshemmenden Maschinenschuhen gelagert sind.

Gemäß einer bevorzugten Weiterbildung ist der Spindelturm unter Ausbildung aller Funktionsflächen und Funktionsräume als monolithisch aufgebauter einteiliger Spindelturm aus Polymerbeton, Reaktionsharzbeton o. dgl. geformt. Somit brauchen auch hier die Funktionsflächen und Funktionsräume nicht mehr spanend nachbearbeitet zu werden.

Gemäß einer bevorzugten Weiterbildung ist an dem Spindelturm ein Vertikalschlitten gelagert, der über einen am Spindelturm angeordneten Kugelgewindeantrieb entlang einer vertikalen Achse linear verfahrbar ist.

Gemäß einer bevorzugten Weiterbildung weist der Kugelgewindeantrieb eine nicht drehende Kugelgewindemutter und eine drehende Kugelgewindespindel auf.

Gemäß einer bevorzugten Weiterbildung steht die Kugelgewindespindel über eine Zahnriemenstufe mit einem Antriebsmotor in Wirkverbindung.

Gemäß einer bevorzugten Weiterbildung ist der Vertikalschlitten über zwei am Spindelturm angeordnete Linearwälzführungen verdreh- und kippsicher geführt.

Gemäß einer bevorzugten Weiterbildung sind die beiden Linearwälzführungen in einer Funktionsebene angeordnet.

Gemäß einer bevorzugten Weiterbildung ist an dem Vertikalschlitten ein entlang einer horizontalen Achse linear verfahrbarer Horizontalschlitten angeordnet, der über einen elektromechanischen Hubzylinder antreibbar ist.

Gemäß einer bevorzugten Weiterbildung ist an dem Horizontalschlitten ein Werkzeuggreifer angeordnet, der zwei in horizontaler Richtung linear verfahrbare Greiferbacken für das Bearbeitungswerkzeug besitzt. Mit den Greiferbacken kann das Bearbeitungswerkzeug seitlich am genormten Werkzeugaufnahmekegel im Werkzeuggreifer eingespannt werden.

Gemäß einer bevorzugten Weiterbildung sind die Greiferbacken pneumatisch, hydraulisch oder elektrisch bewegbar.

Gemäß einer bevorzugten Weiterbildung ist an dem Horizontalschlitten ein Messtaster angeordnet, mit dem die räumliche Lage der Werkzeugablageplätze mit Hilfe einer Referenzmessfläche an den jeweiligen Werkzeugablageplätzen in Bezug auf den Werkzeuggreifer messtechnisch erfassbar ist. Somit kann ein Einlernen (Teachen) der Werkzeugablageplätze in Bezug auf den Werkzeuggreifer in einfacher Weise über einen im Maschinenprogramm ablaufenden Messzyklus automatisiert ablaufen.

Gemäß einer bevorzugten Weiterbildung ist die räumliche Lage der Werkzeugablageplätze durch die Auswertung eines charakteristischen Kraftverlaufs, resultierend aus Bewegungen der Handlingsachsen gegen definierte Anschlagpunkte, messtechnisch erfassbar. Somit kann auch hierdurch ein Einlernen (Teachen) der Werkzeugablageplätze in Bezug auf den Werkzeuggreifer in einfacher Weise über einen im Maschinenprogramm ablaufenden Messzyklus automatisiert ablaufen.

Der Erfindung liegt ferner die Aufgabe zugrunde, ein Verfahren zur automatischen Werkzeugumladung zwischen einem maschinenseitigen Pick-Up-Werkzeugmagazinspeicher und einem Werkzeugmagazinregal in einem Zusatzmagazin breitzustellen, durch welches sich ein optimaler Werkzeugfüllgrad im maschinenseitigen Pick-Up-Werkzeugmagazinspeicher ergibt.

Diese Aufgabe wird gelöst durch ein Verfahren zur automatischen Werkzeugumladung bei einem Werkzeugmagazinregal gemäß einem der vorangehenden Ansprüchen, bei dem das Werkzeugmagazinregal über eine in einer Maschinensteuerung eines vertikalen Bearbeitungszentrums implementierte Werkzeugverwaltung mit einem maschinenseitigen Pick-Up-Werkzeugmagazinspeicher im Bearbeitungszentrum in Kommunikation steht und die Bearbeitungswerkzeuge mit Hilfe eines Werkzeughandlings im Werkzeugmagazinregal nach einer von dem aktuell abzuarbeitenden Bearbeitungsprogramm vorgegebenen und nach weitgehend platzoptimierten Ablagekriterien erstellten Umladeliste gesteuert vom Werkzeugmagazinregal in den maschinenseitigen Pick-Up-Werkzeugmagazinspeicher oder umgekehrt so umgeladen werden können, dass der Werkzeugfüllgrad im Pick-Up-Werkzeugmagazinspeicher optimal ausgefüllt ist und sich somit möglichst eine große Anzahl von Bearbeitungswerkzeugen mit teilweise sehr unterschiedlichen geometrischen Abmessungen im maschinenseitigen Pick-Up-Werkzeugmagazinspeicher befinden und dadurch auch relativ zeitnah vom Pick-Up-Werkzeugmagazinspeicher in die Werkzeugspindel des vertikalen Bearbeitungszentrums eingewechselt werden können.

Unter dem Begriff - Werkzeugfüllgrad - wird im Sinne der vorliegenden Erfindung die Packungsdichte von aufzunehmenden Bearbeitungswerkzeugen im maschinenseitigen Pick-Up-Werkzeugmagazinspeicher verstanden.

Aufgrund des erfinderischen Verfahrens kann ein hoher Werkzeugfüllgrad bzw. eine hohe Packungsdichte bei der Bestückung des maschinenseitigen Pick-Up-Werkzeugmagazinspeichers, insbesondere in Verbindung mit dem erfindungsgemäßen Werkzeugmagazinregal, erzielt werden. Die aufzunehmenden Bearbeitungswerkzeuge werden dabei nach einem vorausschauend berechneten Ein- bzw. Umlagerungsschema in den maschinenseitigen Pick-Up-Werkzeugmagazinspeicher ein- bzw. umsortiert. Dabei ist der Werkzeugdurchmesser des Bearbeitungswerkzeugs das prägende Hauptkriterium für die Sortierung. Das heißt, es wird immer versucht, den Typenmix von großen und kleinen Bearbeitungswerkzeugen bei der Ablage der Bearbeitungswerkzeuge in den maschinenseitigen Pick-Up-Werkzeugmagazinspeicher so zu bestimmen, dass eine möglichst große Anzahl von Bearbeitungswerkzeugen abgelegt werden kann. Obwohl die Anzahl der Werkzeugablageplätze in dem maschinenseitigen Pick-Werkzeugmagazinspeicher in der Regel durch die konstruktive Ausgestaltung fest vorgegeben ist, kann die Packungsdichte im Werkzeugmagazinspeicher durchaus stark variieren. So können zum Beispiel in dem Pick-Up-Werkzeugmagazinspeicher des dargestellten Ausführungsbeispiels bei gleicher Teilung der Ablageplätze im Pick-Up-Werkzeugmagazinspeicher (Teilungsabstand Werkzeugmittelpunkt zu Werkzeugmittelpunkt immer 90 mm) maximal 42 Werkzeuge mit einem maximalen Werkzeugdurchmesser von 80 mm eingelagert werden. Da in der Regel auch Werkzeuge mit einem größeren Werkzeugdurchmesser als 80 mm im Pick-Up-Werkzeugmagazinspeicher eingelagert werden müssen, kann bei einer ungünstigen Ablagesortierung der Fall auftreten, dass die beiden Ablageplätze neben einem großen Werkzeugdurchmesser, z. B. Bearbeitungswerkzeug mit einem Werkzeugdurchmesser von 120 mm, nicht mehr mit einem ähnlich großen Werkzeug belegt werden können, weil das Werkzeug mit dem großen Werkzeugdurchmesser die beiden Nebenablageplätze mehr oder weniger stark überschneidet. So kann zum Beispiel im dargestellten Ausführungsbeispiel ein Bearbeitungswerkzeug mit einem Werkzeugdurchmesser von 120 mm maximal neben zwei Bearbeitungswerkzeug mit einem Werkzeugdurchmesser von 40 mm abgelegt werden. Durch diese Einschränkung wird die Ablage im Werkzeugmagazinspeicher zusätzlich verkompliziert. Wird die Sortierung im Werkzeugmagazinspeicher nur nach rein zeitoptimieren Kriterien vorgenommen, d. h. die Sortierung der Werkzeuge entspricht streng der Einsatzreihenfolge im Bearbeitungsprogramm, so ergibt sich in der Regel kein optimaler Werkzeugfüllgrad im Werkzeugmagazinspeicher. In der EP 1 870 200 B1 ist ein gängiges Verfahren nach dem Stand der Technik zur zeitoptimierten Werkzeugsortierung dargestellt und beschrieben. Ein nicht optimaler Werkzeugfüllgrad wirkt sich aber wiederum negativ auf die Werkzeugwechselzeit aus, da in diesem Fall nicht die volle Werkzeuglagerkapazität im maschinennahen Pick-Up-Werkzeugmagazinspeicher ausgenutzt werden kann und gegebenenfalls Bearbeitungswerkzeuge von einem weiter entfernten Magazinspeicher zeitaufwendig herbeigeschafft werden müssen. Außerdem kommt der Vorteil der zeitoptimierten Sortierung nur bei relativ langsam bewegbaren Werkzeugmagazinspeichern voll zur Wirkung. Zum Beispiel benötigt der im dargestellten Ausführungsbeispiel gezeigte Pick-Up-Werkzeugmagazinspeicher weniger als eine Sekunde für eine 180° Umdrehung, so dass in diesem Fall eine zeitoptimierte Sortierung keinen praktischen Vorteil mehr mit sich bringt, ganz im Gegensatz zur erfindungsgemäßen platzoptimierten Werkzeugsortierung bzw. zur platzoptimierten Werkzeugumladung.

Weitere Einzelheiten, Merkmale und Vorteile der Erfindung ergeben sich aus der nachfolgenden Beschreibung anhand der Zeichnungen. Es zeigen:
- Figur 1: eine perspektivische Ansicht eines erfindungsgemäßen Werkzeugmagazinregals,

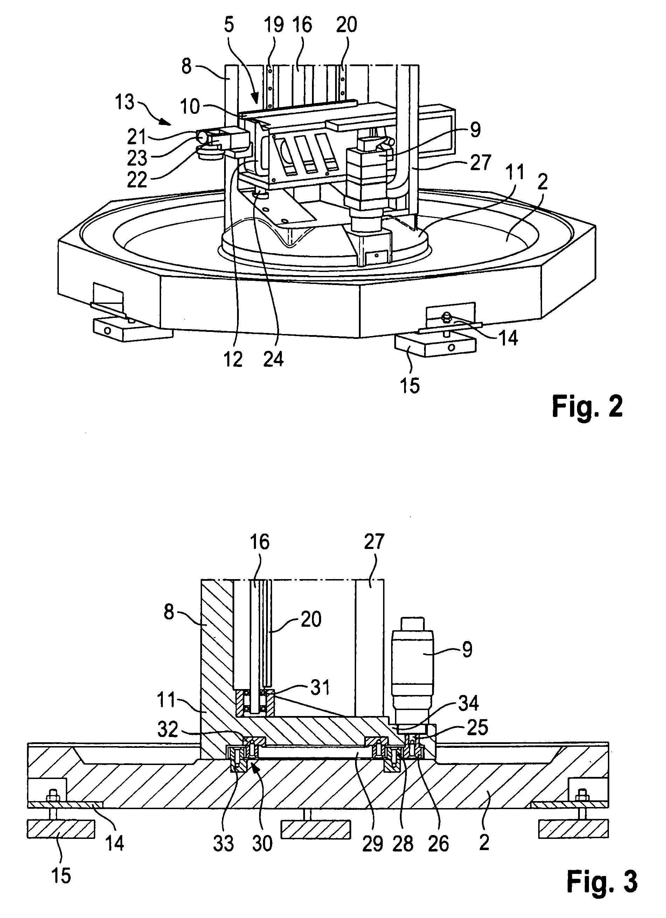

- Figur 2: eine perspektivische Teilansicht des erfindungsgemäßen Werkzeugmagazinregals im Bereich des Grundgestells,
- Figur 3: einen Schnitt durch das Grundgestell, und
- Figur 4: eine Draufsicht auf das erfindungsgemäße Werkzeugmagazinregal mit einem angeschlossenen Bearbeitungszentrum.

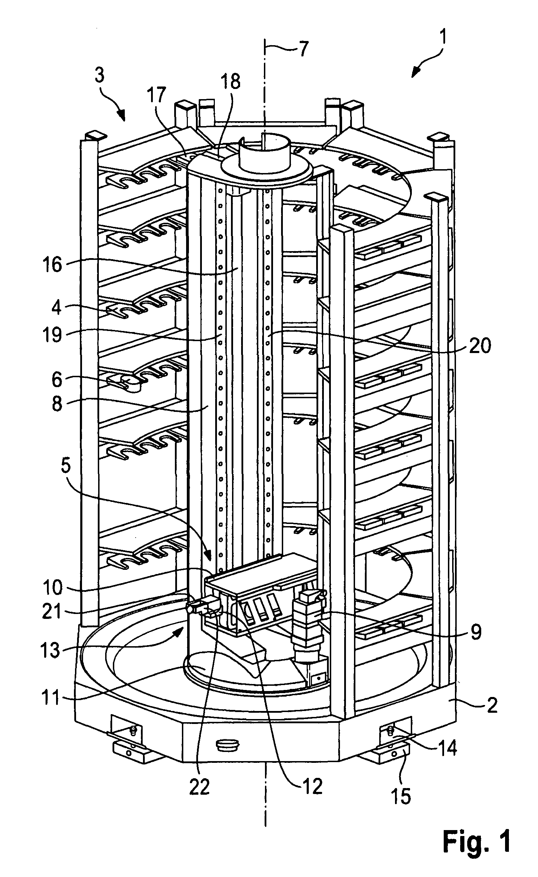

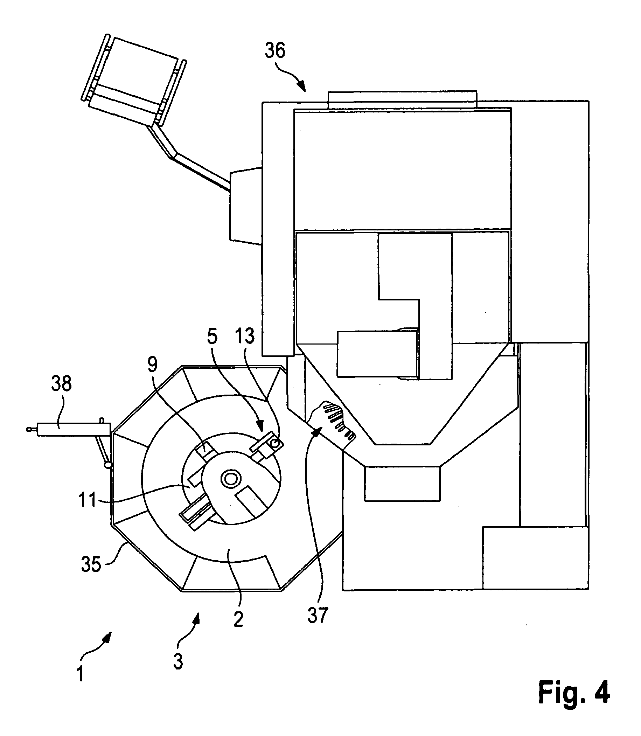

In den Figuren 1 und 4 ist ein modular aufgebautes und autark betreibbares kreisringförmiges Werkzeugmagazinregal 1 in Turmbauweise als Zusatzmagazin für einen in einem vertikalen Bearbeitungszentrum 36 angeordneten maschinenseitigen Pick-Up-Werkzeugmagazinspeicher 37 in einer Draufsicht gezeigt.

In Figur 1 ist das Werkzeugmagazin1 in einer perspektivischen Ansicht zu sehen. Das Werkzeugmagazin1 weist ein Grundgestell auf, das aus einem monolithisch aufgebauten plattenförmigen Grundbett 2 besteht. Das Grundbett 2 dient zur Aufnahme eines Werkzeugregals 3, das im vorliegenden Fall mit fünf Regalfeldern versehen ist. Das Grundbett 2 dient weiterhin zur Aufnahme eines kraftbetriebenen Werkzeughandlings 5 für den Werkzeugtransport vom Zusatzmagazin 1 zu dem maschinenseitigen Pick-Up-Werkzeugmagazinspeicher 37 und umgekehrt und zur Aufnahme einer Schutzumhausung 35 für den Eingreifschutz in das Werkzeugmagazinregal 1.

An der Schutzumhausung 35 kann auch ein Bedienfeld 38 angeordnet sein.

Das Werkzeugmagazinregal 1 ist mit einer Vielzahl von vertikal übereinander und kreisringförmig angeordneten, nicht beweglichen Werkzeugablageplätzen 4 für die Aufnahme einer Vielzahl von gleichen oder unterschiedlichen Bearbeitungswerkzeugen 6 versehen. Im Kreismittelpunkt der Werkzeugablageplätze 4 befindet sich ein Sockel 11 für eine vertikale Drehachse 7, die sich frei auskragend von dem Grundbett 2 aus nach oben erstreckt und einen Spindelturm 8 trägt, der mittels eines Antriebsmotors 9 um die Drehachse 7 drehbar ist.

Die Drehachse 7 ist in einem Turmlager gehaltert, das als ein- oder zweireihiges Vierpunktlager ausgebildet ist,

An dem Spindelturm 8 ist entlang einer vertikalen Achse ein linear verfahrbarer Vertikalschlitten 10 gelagert, der einen entlang einer horizontalen Achse linear mittels eines elektromechanischen Hubzylinders verfahrbaren Horizontalschlitten 12 trägt. An dem Horizontalschlitten 12 sind Werkzeuggreifer 13 für die Aufnahme und Abgabe der Bearbeitungswerkzeuge 6 angeordnet.

Das Grundbett 2 ist unter Ausbildung aller Funktionsflächen und Funktionsräume aus Polymerbeton, Reaktionsharzbeton o. dgl. derart geformt, dass die Funktionsflächen und Funktionsräume nicht mehr spanend nachbearbeitet zu werden brauchen.

Der Spindelturm 8 ist ebenfalls unter Ausbildung aller Funktionsflächen und Funktionsräume aus Polymerbeton, Reaktionsharzbeton o. dgl. derart geformt, dass die Funktionsflächen und Funktionsräume nicht mehr spanend nachbearbeitet zu werden brauchen.

Das Grundbett 2 ist auf Maschinenfüßen 14 gelagert, die in der Höhe anpassbar sind und in rutsch- und vibrationshemmenden Maschinenschuhen 15 ruhen.

Der an dem Spindelturm 8 entlang einer vertikalen Achse linear verfahrbare Vertikalschlitten 10 ist über einen am Spindelturm 8 angeordneten Kugelgewindeantrieb verfahrbar. Der Kugelgewindeantrieb weist eine nicht drehende Kugelgewindemutter und eine drehende Kugelgewindespindel 16 auf, die über eine Zahnriemenstufe 18 mit einem Antriebsmotor 17 in Wirkverbindung steht. Die Kugelgewindespindel 16 ist über eine Loslagerung 31 in dem Sockel 11 gelagert. Um den Vertikalschlitten 10 verdreh- und kippsicher zu führen, ist dieser über zwei am Spindelturm 8 angeordnete Linearwälzführungen 19, 20, die beide in der gleichen Funktionsebene liegen, gehalten.

Der Werkzeuggreifer 13 besitzt zwei in horizontaler Richtung linear verfahrbare Greiferbacken 21, 22, mit denen das Bearbeitungswerkzeug 6 seitlich am genormten Werkzeugaufnahmekegel 23 im Werkzeuggreifer 13 eingespannt werden kann. Die Greifbewegung der Greiferbacken 21, 22 kann pneumatisch, hydraulisch oder elektrisch erfolgen.

Auf dem Sockel 11 ist ein Endanschlag 24 vorgesehen, der die Vertikalbewegung des Vertikalschlittens 10 begrenzt.

Der Antriebsmotor 9 für den Spindelturm 8, der über eine Flanschfläche 34 fest an dem Spindelturm 8 angebracht ist, trägt auf seiner Motorwelle 25 ein Antriebsritzel 26. Weiterhin weist das Vierpunktlager, welches die Drehachse 7 lagert, einen mit einer Außenverzahnung versehenen Außenring 28, der mit dem Grundbett 2 verschraubt ist, und einen Innenring 29, der mit dem Spindelturm 8 verschraubt ist, auf. Die Anordnung ist so gewählt, dass sich das Antriebsritzel 26 mit dem Antriebsmotor 9 beim Drehen des Spindelturms 8 an der feststehenden Außenverzahnung 28 des Turmlagers abwälzt.

Zur Energieversorgung des Antriebsmotors 9 ist eine Schleppkettenführung 27 vorgesehen.

Der Sockel 11, der eine Kragarmlagerung 30 für den Spindelturm 8 bildet, ist über Lagersitze 32, 33 an dem Grundbett 2 abgestützt.

An dem Horizontalschlitten 12 ist ein Messtaster angeordnet, mit dem die räumliche Lage der Werkzeugablageplätze 4 mit Hilfe einer Referenzmessfläche an den jeweiligen Werkzeugablageplätzen 4 in Bezug auf den Werkzeuggreifer 13 messtechnisch erfasst werden kann. Somit kann ein Einlernen (Teachen) der Werkzeugablageplätze 4 in Bezug auf den Werkzeuggreifer 13 in einfacher Weise über einen im Maschinenprogramm ablaufenden Messzyklus automatisiert ablaufen.

Die räumliche Lage der Werkzeugablageplätze 4 kann auch durch die Auswertung eines charakteristischen Kraftverlaufs, resultierend aus Bewegungen der Handlingsachsen gegen definierte Anschlagpunkte, messtechnisch erfasst werden. Auch hierdurch kann ein Einlernen (Teachen) der Werkzeugablageplätze 4 in Bezug auf den Werkzeuggreifer 13 in einfacher Weise über einen im Maschinenprogramm ablaufenden Messzyklus automatisiert ablaufen.

Das vorstehend erläuterte Werkzeugmagazinregal 1 wird vorteilhafterweise mit einem Verfahren zur automatischen Werkzeugumladung betrieben, bei dem das Werkzeugmagazinregal 1 über eine in einer Maschinensteuerung des vertikalen Bearbeitungszentrums 36 implementierte Werkzeugverwaltung mit dem maschinenseitigen Pick-Up-Werkzeugmagazinspeicher 37 im Bearbeitungszentrum 36 in Kommunikation steht und die Bearbeitungswerkzeuge 6 mit Hilfe des Werkzeughandlings 5 im Werkzeugmagazinregal 1 nach einer von dem aktuell abzuarbeitenden Bearbeitungsprogramm vorgegebenen und nach weitgehend platzoptimierten Ablagekriterien erstellten Umladeliste gesteuert vom Werkzeugmagazinregal 1 in den maschinenseitigen Pick-Up-Werkzeugmagazinspeicher 37 oder umgekehrt so umgeladen werden können, dass der Werkzeugfüllgrad im Pick-Up-Werkzeugmagazinspeicher 37 optimal ausgefüllt ist und sich somit möglichst eine große Anzahl von Bearbeitungswerkzeugen 6 mit teilweise sehr unterschiedlichen geometrischen Abmessungen im maschinenseitigen Pick-Up-Werkzeugmagazinspeicher 37 befinden und dadurch auch relativ zeitnah vom Pick-Up-Werkzeugmagazinspeicher 37 in die Werkzeugspindel des vertikalen Bearbeitungszentrums 36 eingewechselt werden können.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste

- 1: Werkzeugmagazinregal
- 2: Grundbett
- 3: Werkzeugregal
- 4: Werkzeugablageplätze
- 5: Werkzeughandling
- 6: Bearbeitungswerkzeuge
- 7: Drehachse
- 8: Spindelturm
- 9: Antriebsmotor
- 10: Vertikalschlitten
- 11: Sockel
- 12: Horizontalschlitten
- 13: Werkzeuggreifer
- 14: Maschinenfuß
- 15: Maschinenschuh
- 16: Kugelgewindespindel
- 17: Antriebsmotor
- 18: Zahnriemenstufe
- 19: Linearwälzführung
- 20: Linearwälzführung
- 21: Greiferbacke
- 22: Greiferbacke
- 23: Werkzeugaufnahmekegel
- 24: Endanschlag
- 25: Motorwelle
- 26: Antriebsritzel
- 27: Schleppkettenführung
- 28: Außenring
- 29: Innenring
- 30: Kragarmlagerung
- 31: Loslagerung
- 32: Lagersitz
- 33: Lagersitz
- 34: Flanschfläche
- 35: Schutzumhausung
- 36: Bearbeitungszentrum
- 37: Pick-Up-Werkzeugmagazinspeicher
- 38: Bedienfeld

## Patentansprüche

1. Kreisringförmiges Werkzeugmagazinregal (1) in Turmbauweise, mit einem Grundgestell für die Aufnahme
- eines Werkzeugregals (3), das eine Vielzahl von vertikal übereinander und kreisringförmig angeordneten, nicht beweglichen Werkzeugablageplätzen (4) für Bearbeitungswerkzeuge (6) aufweist, und
- eines kraftbetriebenen Werkzeughandlings (5) für den Werkzeugtransport von dem Werkzeugmagazinregal (1) zu einem maschinenseitigen Pick-Up-Werkzeugmagazinspeicher (37) und umgekehrt,
wobei im Kreismittelpunkt der Werkzeugablageplätze (4) ein Spindelturm (8) angeordnet ist, der um eine vertikale Drehachse (7) drehbar gelagert ist, **dadurch gekennzeichnet, dass** das Grundgestell aus einem monolithisch aufgebauten, plattenförmigen Grundbett (2) besteht, in dem die Drehachse (7) über eine Lageranordnung frei auskragend gelagert ist.

2. Werkzeugmagazinregal nach Anspruch 1 **dadurch gekennzeichnet, dass** die Lageranordnung als Turmlager ausgebildet ist.

3. Werkzeugmagazinregal nach Anspruch 2 **dadurch gekennzeichnet, dass** das Turmlager als einreihiges oder zweireihiges Vierpunktlager ausgebildet ist.

4. Werkzeugmagazinregal nach Anspruch 3 **dadurch gekennzeichnet, dass** das Vierpunktlager einen mit einer Außenverzahnung versehenen Außenring (28), der mit dem Grundbett (2) verschraubt ist, und einen Innenring (29), der mit dem Spindelturm (8) verschraubt ist, aufweist.

5. Werkzeugmagazinregal nach Anspruch 4 **dadurch gekennzeichnet, dass** für den Drehantrieb des Spindelturms (8) ein Antriebsmotor (9) mit einem Antriebsritzel (26) vorgesehen ist, der fest an dem Spindelturm (8) angebracht ist und der mit der Außenverzahnung des Außenrings (28) in Wirkverbindung steht, so dass sich das Antriebsritzel (26) mit dem Antriebsmotor (9) beim Drehen des Spindelturms (8) an der feststehenden Außenverzahnung (28) des Turmlagers abwälzt.

6. Werkzeugmagazinregal nach einem der vorhergehenden Ansprüche, **dadurch gekennzeichnet, dass** das Grundbett (2) unter Ausbildung aller Funktionsflächen und Funktionsräume einteilig aus Polymerbeton, Reaktionsharzbeton o. dgl. geformt ist.

7. Werkzeugmagazinregal nach einem der vorhergehenden Ansprüche, **dadurch gekennzeichnet, dass** das Grundbett (2) auf Maschinenfüßen (14) gelagert ist, die in der Höhe anpassbar und in rutsch- und vibrationshemmenden Maschinenschuhen (15) gelagert sind.

8. Werkzeugmagazinregal nach einem der vorhergehenden Ansprüche, **dadurch gekennzeichnet, dass** der Spindelturm (8) unter Ausbildung aller Funktionsflächen und Funktionsräume als monolithisch aufgebauter einteiliger Spindelturm (8) aus Polymerbeton, Reaktionsharzbeton o. dgl. geformt ist.

9. Werkzeugmagazinregal nach einem der vorhergehenden Ansprüche, **dadurch gekennzeichnet, dass** an dem Spindelturm (8) ein Vertikalschlitten (10) gelagert ist, der über einen am Spindelturm (8) angeordneten Kugelgewindeantrieb entlang einer vertikalen Achse linear verfahrbar ist.

10. Werkzeugmagazinregal nach Anspruch 9 **dadurch gekennzeichnet, dass** der Kugelgewindeantrieb eine nicht drehende Kugelgewindemutter und eine drehende Kugelgewindespindel (16) aufweist.

11. Werkzeugmagazinregal nach Anspruch 10 **dadurch gekennzeichnet, dass** die Kugelgewindespindel (16) über eine Zahnriemenstufe (18) mit einem Antriebsmotor (17) in Wirkverbindung steht.

12. Werkzeugmagazinregal nach einem der Ansprüche 9 bis 11, **dadurch gekennzeichnet, dass** der Vertikalschlitten (10) über zwei am Spindelturm (8) angeordnete Linearwälzführungen (19, 20) verdreh- und kippsicher geführt ist.

13. Werkzeugmagazinregal nach Anspruch 12 **dadurch gekennzeichnet, dass** die beiden Linearwälzführungen (19, 20) in einer Funktionsebene angeordnet sind.

14. Werkzeugmagazinregal nach einem der Ansprüche 9 bis 13, **dadurch gekennzeichnet, dass** an dem Vertikalschlitten (10) ein entlang einer horizontalen Achse linear verfahrbarer Horizontalschlitten (12) angeordnet ist, der über einen elektromechanischen Hubzylinder antreibbar ist.

15. Werkzeugmagazinregal nach Anspruch 14, **dadurch gekennzeichnet, dass** an dem Horizontalschlitten (12) ein Werkzeuggreifer (13) angeordnet ist, der zwei in horizontaler Richtung linear verfahrbare Greiferbacken (21, 22) für das Bearbeitungswerkzeug (6) besitzt.

16. Werkzeugmagazinregal nach Anspruch 15 **dadurch gekennzeichnet, dass** die Greiferbacken (21, 22) pneumatisch, hydraulisch oder elektrisch bewegbar sind.

17. Werkzeugmagazinregal nach einem der Ansprüche 14 bis 16, **dadurch gekennzeichnet, dass** an dem Horizontalschlitten (12) ein Messtaster angeordnet ist, mit dem die räumliche Lage der Werkzeugablageplätze (4) mit Hilfe einer Referenzmessfläche an den jeweiligen Werkzeugablageplätzen (4) in Bezug auf den Werkzeuggreifer (13) messtechnisch erfassbar ist.

18. Werkzeugmagazinregal nach einem der Ansprüche 1 bis 16, **dadurch gekennzeichnet, dass** die räumliche Lage der Werkzeugablageplätze (4) durch die Auswertung eines charakteristischen Kraftverlaufs, resultierend aus Bewegungen der Handlingsachsen gegen definierte Anschlagpunkte, messtechnisch erfassbar ist.

19. Verfahren zur automatischen Werkzeugumladung bei einem Werkzeugmagazinregal (1) gemäß einem der vorangehenden Ansprüchen, bei dem das Werkzeugmagazinregal (1) über eine in einer Maschinensteuerung eines vertikalen Bearbeitungszentrums (36) implementierte Werkzeugverwaltung mit einem maschinenseitigen Pick-Up-Werkzeugmagazinspeicher (37) im Bearbeitungszentrum (36) in Kommunikation steht und die Bearbeitungswerkzeuge (6) mit Hilfe eines Werkzeughandlings (5) im Werkzeugmagazinregal (1) nach einer von dem aktuell abzuarbeitenden Bearbeitungsprogramm vorgegebenen und nach weitgehend platzoptimierten Ablagekriterien erstellten Umladeliste gesteuert vom Werkzeugmagazinregal (1) in den maschinenseitigen Pick-Up-Werkzeugmagazinspeicher (37) oder umgekehrt so umgeladen werden können, dass der Werkzeugfüllgrad im Pick-Up-Werkzeugmagazinspeicher (37) optimal ausgefüllt ist und sich somit möglichst eine große Anzahl von Bearbeitungswerkzeugen (6) mit teilweise sehr unterschiedlichen geometrischen Abmessungen im maschinenseitigen Pick-Up-Werkzeugmagazinspeicher (37) befinden und dadurch auch relativ zeitnah vom Pick-Up-Werkzeugmagazinspeicher (37) in die Werkzeugspindel des vertikalen Bearbeitungszentrums (36) eingewechselt werden können.

## Claims

1. A circular, annular tool magazine shelf (1) of a tower construction, comprising a base frame adapted for receiving
- a tool shelf (3) which has a plurality of immovable tool deposition places (4), arranged in vertically superposed fashion and in a circular ring, adapted for machining tools (6), and
- a power-driven tool handling system (5) adapted for tool transport from the tool magazine shelf (1) to a machine-side pick-up tool magazine store (37), and vice versa,
wherein a spindle tower (8) which is mounted rotatably about a vertical rotation shaft (7) is arranged in a circle center-point of the tool deposition places (4), **characterized in that** the base frame consists of a monolithically constructed, plate-shaped foundation (2) in which the rotation shaft (7) is mounted overhanging freely by way of a mounting arrangement.

2. The tool magazine shelf of claim 1, **characterized in that** the mounting arrangement is in the form of a tower mounting.

3. The tool magazine shelf of claim 2, **characterized in that** the tower mounting is in the form of a one-row four-point bearing or a two-row four-point bearing.

4. The tool magazine shelf of claim 3, **characterized in that** the four-point bearing includes an outer ring (28), which is provided with external toothing and screwed to the foundation (2), and an inner ring (29), which is screwed to the spindle tower (8).

5. The tool magazine shelf of claim 4, **characterized in that** a drive motor (9) having a drive pinion (26) is provided for the rotary drive of the spindle tower (8), and is rigidly attached to the spindle tower (8) and operatively connected to the external toothing of the outer ring (28), in such a way that the drive pinion (26) rolls together with the drive motor (9) on the stationary external toothing (28) of the tower mounting when the spindle tower (8) rotates.

6. The tool magazine shelf of any one of the preceding claims, **characterized in that** the foundation (2) is formed by forming all functional surfaces and functional spaces in one piece from a polymer concrete, reaction resin concrete, or the like.

7. The tool magazine shelf of any one of the preceding claims, **characterized in that** the foundation (2) is mounted on machine feet (14), which are adaptable in height and are mounted in slip-proof and vibration-proof machine shoes (15).

8. The tool magazine shelf of any one of the preceding claims, **characterized in that** the spindle tower (8) is formed by forming all functional surfaces and functional spaces as a monolithically constructed single-piece spindle tower (8) of a polymer concrete, reaction resin concrete, or the like.

9. The tool magazine shelf of any one of the preceding claims, **characterized in that** a vertical slide (10) is mounted on the spindle tower (8) and is linearly displaceable along a vertical axis by way of a ball screw arranged on the spindle tower (8).

10. The tool magazine shelf of claim 9, **characterized in that** the ball screw comprises a non-rotating ball screw nut and a rotating ball screw spindle (16).

11. The tool magazine shelf of claim 10, **characterized in that** the ball screw spindle (16) is operatively connected to a drive motor (17) via a gear belt stage (18).

12. The tool magazine shelf of any one of claims 9 to 11, **characterized in that** the vertical slide (10) is guided in a torque-proof and tilt-proof manner via two linear roller guides (19, 20) arranged on the spindle tower (8).

13. The tool magazine shelf of claim 12, **characterized in that** the two linear roller guides (19, 20) are arranged in one functional plane.

14. The tool magazine shelf of any one of claims 9 to 13, **characterized in that** a horizontal slide (12) which is linearly displaceable along a horizontal axis is arranged on the vertical slide (10) and can be driven by way of an electromechanical lifting cylinder.

15. The tool magazine shelf of claim 14, **characterized in that** a tool gripper (13) is arranged on the horizontal slide (12) and has two horizontally linearly displaceable gripper jaws (21, 22) adapted for gripping the machining tool (6).

16. The tool magazine shelf of claim 15, **characterized in that** the gripper jaws (21, 22) are movable pneumatically, hydraulically or electrically.

17. The tool magazine shelf of any one of claims 14 to 16, **characterized in that** a calliper, with which a spatial position of the tool deposition places (4) can be metrologically determined with respect to the tool gripper (13) using a reference measurement surface on the respective tool deposition places (4), is arranged on the horizontal slide (12).

18. The tool magazine shelf of any one of claims 1 to 16, **characterized in that** the spatial position of the tool deposition places (4) can be metrologically determined by evaluating a characteristic force curve resulting from movements of handling system axes towards defined stop points.

19. A method for automatically reloading tools in a tool magazine shelf (1) according to any one of the preceding claims, in which the tool magazine shelf (1) communicates with a machine-side pick-up tool magazine store (37) in a vertical machining center (36) via a tool management system implemented in a machine control system of the machining center (36), and the machining tools (6) can be reloaded from the tool magazine shelf (1) into the machine-side pick-up tool magazine store (37), or vice versa, in a controlled manner with the help of a tool handling system (5) in the tool magazine shelf (1) in accordance with a reloading list specified by the machining program currently to be implemented and in accordance with largely space-optimized deposition criteria, in such a way that a tool filling level in the pick-up tool magazine store (37) is filled up in an optimum manner and thus a maximum possible number of machining tools (6), in some cases of very different geometric dimensions, are located in the machine-side pick-up tool magazine store (37), and can thus also be changed into the tool spindle of the vertical machining center (36) from the pick-up tool magazine store (37) relatively promptly.

## Revendications

1. Etagère de magasin d'outil (1) de forme annulaire circulaire présentant une structure en forme de tour, comprenant un châssis de base pour le logement
- d'une étagère d'outil (3), qui présente une pluralité d'emplacements porte-outils (4), disposés les uns sur les autres de manière verticale et de manière à présenter une forme circulaire annulaire, non mobiles, destinés à des outils d'usinage (6), et
- d'un système de gestion des outils (5) entraîné par une force, destiné au transport d'outils depuis l'étagère de magasin d'outil (1) en direction d'un système de stockage de magasin d'outil de pick up (37) côté machine et inversement,
sachant qu'une tour à broche (8) est disposée au centre des emplacements porte-outils (4), laquelle est montée de manière à pouvoir tourner autour d'un axe de rotation (7) vertical, **caractérisée en ce que** le châssis de base est constitué d'un lit de base (2) en forme de plaque présentant une structure monolithique, dans lequel l'axe de rotation (7) est monté de manière à déborder librement au-dessus d'un ensemble de paliers.

2. Etagère de magasin d'outil selon la revendication 1, **caractérisée en ce que** l'ensemble de paliers est réalisé sous la forme d'un palier formant une tour.

3. Etagère de magasin d'outil selon la revendication 2, **caractérisée en ce que** le palier formant une tour est réalisé sous la forme d'un palier à quatre points à rangée unique ou à double rangée.

4. Etagère de magasin d'outil selon la revendication 3, **caractérisée en ce que** le palier à quatre points présente une bague extérieure (28) pourvue d'une denture extérieure, laquelle est vissée au lit de base (2), et une bague intérieure (29), qui est vissée à la tour à broche (8).

5. Etagère de magasin d'outil selon la revendication 4, **caractérisée en ce qu'**est prévu, pour l'entraînement en rotation de la tour à broche (8), un moteur d'entraînement (9) comprenant un pignon d'entraînement (26), qui est installé de manière solidaire au niveau de la tour formant une broche (8) et qui est en liaison active avec la denture extérieure de la bague extérieure (28) de sorte que le pignon d'entraînement (26) roule à l'aide du moteur d'entraînement (9) lors de la rotation de la tour à broche (8) au niveau de la denture extérieure (28) immobile du palier formant une tour.

6. Etagère de magasin d'outil selon l'une quelconque des revendications précédentes, **caractérisée en ce que** le lit de base (2) est formé en une seule partie à partir d'un béton polymère, d'un béton de résine composite, ou similaire en réalisant toutes les surfaces fonctionnelles et espaces fonctionnels.

7. Etagère de magasin d'outil selon l'une quelconque des revendications précédentes, **caractérisée en ce que** le lit de base (2) est monté sur des pieds de machine (14), dont la hauteur peut être adaptée et qui sont montés dans des patins de machine (15) antidérapants et anti-vibrations.

8. Etagère de magasin d'outil selon l'une quelconque des revendications précédentes, **caractérisée en ce que** la tour à broche (8) est formée sous la forme d'une tour à broche (8) d'un seul tenant présentant une structure monolithique en béton polymère, en béton de résine composite ou similaire en réalisant des surfaces fonctionnelles et des espaces fonctionnels.

9. Etagère de magasin d'outil selon l'une quelconque des revendications précédentes, **caractérisée en ce qu'**un chariot vertical (10) est monté au niveau de la tour à broche (8), lequel peut être déplacé de manière linéaire le long d'un axe vertical par l'intermédiaire d'un entraînement fileté à billes disposé au niveau de la tour à broche (8).

10. Etagère de magasin d'outil selon la revendication 9, **caractérisée en ce que** l'entraînement fileté à billes présente un écrou fileté à billes non rotatif et une broche filetée à billes (16) rotative.

11. Etagère de magasin d'outil selon la revendication 10, **caractérisée en ce que** la broche filetée à billes (16) est en liaison fonctionnelle avec un cran de courroie dentée (18) comprenant un moteur d'entraînement (17).

12. Etagère de magasin d'outil selon l'une quelconque des revendications 9 à 11, **caractérisée en ce que** le chariot vertical (10) est guidé sans risque de torsion et sans risque de basculement par l'intermédiaire de deux guidages de roulement linéaires (19, 20) disposés au niveau de la tour à broche (8).

13. Etagère de magasin d'outil selon la revendication 12, **caractérisée en ce que** les deux guidages de roulement linéaires (19, 20) sont disposés dans un plan fonctionnel.

14. Etagère de magasin d'outil selon l'une quelconque des revendications 9 à 13, **caractérisée en ce qu'**un chariot horizontal (12) pouvant être déplacé de manière linéaire le long d'un axe horizontal est disposé au niveau du chariot vertical (10), lequel chariot horizontal peut être entraîné par l'intermédiaire d'un cylindre de levée électromécanique.

15. Etagère de magasin d'outil selon la revendication 14, **caractérisée en ce qu'**un système de préhension d'outil (13) est disposé au niveau du chariot horizontal (12), lequel possède deux mâchoires de préhension (21, 22) pouvant être déplacées de manière linéaire dans la direction horizontale pour l'outil d'usinage (6).

16. Etagère de magasin d'outil selon la revendication 15, **caractérisée en ce que** les mâchoires de préhension (21, 22) peuvent être déplacées de manière pneumatique, hydraulique ou électrique.

17. Etagère de magasin d'outil selon l'une quelconque des revendications 14 à 16, **caractérisée en ce qu'**un palpeur de mesure est disposé au niveau du chariot horizontal (12), à l'aide duquel la position spatiale des emplacements porte-outils (4) peut être détectée par une technique de mesure à l'aide d'une surface de mesure de référence au niveau des emplacements porte-outils (4) par rapport au système de préhension d'outil (13).

18. Etagère de magasin d'outil selon l'une quelconque des revendications 1 à 16, **caractérisée en ce que** la position spatiale des emplacements porte-outils (4) peut être détectée par l'analyse d'une variation de force caractéristique, résultant des mouvements des axes de gestion à l'encontre des points de butée définis.

19. Procédé servant à changer automatiquement d'outil pour une étagère de magasin d'outil (1) selon l'une quelconque des revendications précédentes, dans le cadre duquel l'étagère de magasin d'outil (1) se trouve en communication avec un système de stockage de magasin d'outil de pick up (37) côté machine dans le centre d'usinage (36) par l'intermédiaire d'un système de gestion d'outil implémenté dans une commande de machine d'un centre d'usinage (36) vertical, et en ce que les outils d'usinage (6) peuvent être changés à l'aide d'un système de gestion des outils (5) dans l'étagère de magasin d'outil (1) selon une liste de changement prédéfinie par le programme d'usinage à suivre momentanément et établie selon des critères de dépôt largement optimisés en termes d'encombrement, de manière commandée par l'étagère de magasin d'outil (1) dans le système de stockage de magasin d'outil de pick up (37) côté machine ou inversement, de sorte que le niveau de remplissage d'outil est optimisé dans le système de stockage de magasin d'outil de pick up (37) et qu'un nombre aussi grand que possible d'outils d'usinage (6) présentant des dimensions géométriques en partie très différentes se trouve dans le système de stockage de magasin d'outil de pick up (37) côté machine et peuvent être changés de ce fait également de manière relativement instantanée par le système de stockage de magasin d'outils (37) dans la broche d'outil du centre d'usinage (36) vertical.
